# EUROPÄISCHE PATENTANMELDUNG

(11) **EP 0 936 799 A2**
(43) Veröffentlichungstag der Anmeldung: **18.08.1999**
(21) Anmeldenummer: 99100606.5
(22) Anmeldetag: 14.01.1999
(51) Int. Cl.: H04N 1/00

(54) **Verfahren und Vorrichtung zum digitalen Erfassen fotografischer Filme**

(30) Priorität: 09.02.1998 DE 19805048
(71) Anmelder: AGFA-GEVAERT AG, 51301 Leverkusen (DE)
(72) Erfinder: Treiber, Helmut Dr., 81479 München (DE)

(57) **Zusammenfassung**

Die Erfindung geht aus von einem Verfahren zum digitalen Erfassen fotografischer Filme, die eine Vielzahl von Einzelbildern aufweisen, wobei die Einzelbilder zuerst mit einer ersten Auflösung abgetastet, aus den Abtastwerten Parameter für eine weitere Abtastung ermittelt und die Filme mit einer zweiten, höheren Auflösung abgetastet werden. Nach dem Abtasten einer Vielzahl von Einzelbildern werden aus den Abtastwerten der ersten Abtastung die Positionen der Einzelbilder auf dem Film ermittelt und die Einzelbilder für die weitere Abtastung positioniert. Die weitere Abtastung erfolgt in einer Phase, in der sich das abzutastende Einzelbild in Ruhelage befindet.

## Beschreibung

Die Erfindung geht aus von einem Verfahren zum digitalen Erfassen fotografischer Filme nach dem Oberbegriff von Anspruch 1 und einer entsprechenden Vorrichtung nach dem Oberbegriff von Anspruch 7.

Um Einzelbilder auf fotografischen Filmen bearbeiten und dann, beispielsweise mit einem Laserprinter, auf Papier belichten zu können, müssen die Bilder mit hoher Auflösung gescannt und digital erfaßt werden. Hierzu ist es bekannt, für jedes Einzelbild einen sogenannten Prescan mit niedriger Auflösung durchzuführen, bei dem insbesondere Einstellwerte für einen sogenannten Mainscan mit hoher Auflösung ermittelt werden. Dies ist notwendig, um den Mainscanner so einrichten zu können, daß beispielsweise bei sehr hellen Bildern die Abtastsensoren nicht zu stark und bei sehr dunklen Bildern nicht zu gering belichtet werden und so ein Rauschen die eigentlichen Meßwerte überlagert.

In der DE-AS 19 14 360 ist ein Verfahren zum Herstellen von Papierkopien von fotografischen Filmen beschrieben, bei dem ein ganzer Film vermessen wird, bevor die Kopierlichtmengen in den einzelnen Farben für jedes Einzelbild festgelegt werden. In der DE-OS 28 40 787 und der DE-OS 29 12 130 ist erläutert, wie aus den gemessenen Werten film- bzw. vorlagenspezifische Daten ermittelt werden können.

Es war die Aufgabe der Erfindung, ein Verfahren und eine Vorrichtung zum digitalen Erfassen fotografischer Filme so auszugestalten, daß die Erfassung schnell und kostengünstig durchführbar ist und Papierbilder, die mit diesen digitalen Daten produziert werden, eine hohe Qualität aufweisen.

Gelöst wird die Aufgabe durch ein Verfahren mit den kennzeichnenden Merkmalen des ersten Anspruchs und eine Vorrichtung mit den kennzeichnenden Merkmalen von Anspruch 7. Es hat sich herausgestellt, daß eine exakte Abtastung des Films am einfachsten zu realisieren ist, wenn jedes Einzelbild positioniert und dann in Ruhelage gescannt wird. Hierzu müssen jedoch zuerst die Positionen der Einzelbilder auf dem Film festgestellt werden. Erfindungsgemäß werden diese Positionen mit Hilfe der sogenannten Prescan-Daten ermittelt. In der Prescan-Einrichtung wird mit einer geringen Auflösung gearbeitet, so daß der Film mit verhältnismäßig großer Geschwindigkeit durch diese Einrichtung transportiert werden kann. Am einfachsten läßt sich die Positionsbestimmung der Einzelbilder durchführen, wenn der ganze Film bereits den Prescan durchlaufen hat, so daß alle Daten zur Verfügung stehen. Auf diese Weise lassen sich sehr leicht Strukturen im Bildinhalt von den eigentlichen Bildkanten unterscheiden.

Bereits der Prescan wird vorteilhafterweise in den Farben Rot, Grün und Blau durchgeführt. Damit lassen sich neben den Bildpositionen auch filmspezifische Daten ermitteln. Mit diesen Daten können dann Parameter für den Mainscan und die digitale Slgnalverarbeitung festgelegt werden.

Besonders vorteilhaft ist es, wenn der Prescan des Films abgeschlossen ist, bevor der Mainscan beginnt. Damit läßt sich die größte Sicherheit bei der Ermittlung der filmspezifischen Daten und der Positionen der Einzelbilder erreichen. Hierzu können die Prescan- und die Mainscan-Einrichtung so angeordnet sein, daß zwischen beiden Einrichtungen eine Speicherschlaufe ausgebildet werden kann, die die gesamte Filmlänge aufnimmt.

Die beiden Scaneinrichtungen können aber auch direkt nebeneinander angeordnet sein. Der Film wird dann für den Prescan zuerst in die eine Richtung transportiert und danach für den Mainscan in die entgegengesetzte Richtung zurückgezogen.

Die Mainscan-Einrichtung weist vorteilhafterweise ein Flächen-CCD-Array auf, so daß jedes Einzelbild des Filmes in Ruhelage abgetastet werden kann. Hierzu muß das Flächen-CCD-Array eine Größe aufweisen, die sicherstellt, daß das gesamte Einzelbild erfaßt wird. Die Abbildung kann entweder direkt oder über ein Objektiv erfolgen. Das Licht für die Abtastung ist über ein entsprechendes Filteraggregat anfärbbar, so daß bei der Belichtungssteuerung für den Mainscan die Prescan-Werte entsprechend verwendet werden können. Dabei kann die Belichtung sequentiell in den drei Farben rot, grün und blau erfolgen.

In der Prescan-Einrichtung sind drei Sensorzeilen vorgesehen, die der Film nacheinander passiert. Die Sensorzeilen sind jeweils mit einem Farbfilter abgedeckt. Es besteht jedoch auch die Möglichkeit, eine Zeile des Films über Strahlteiler in eine rote, grüne und blaue Zeile aufzuteilen und diese dann auf drei Sensorzeilen zu projizieren. Weitere Einzelheiten und Vorteile der Erfindung ergeben sich aus den Unteransprüchen im Zusammenhang mit der Beschreibung von Ausführungsbeispielen, die anhand der Zeichnung eingehend erläutert werden.

Es zeigen:
- Fig. 1: einen erfindungsgemäßen Filmscanner mit Vor- und Rücklauf des Filmes und
- Fig. 2: den Aufbau eines Durchlaufscanners.

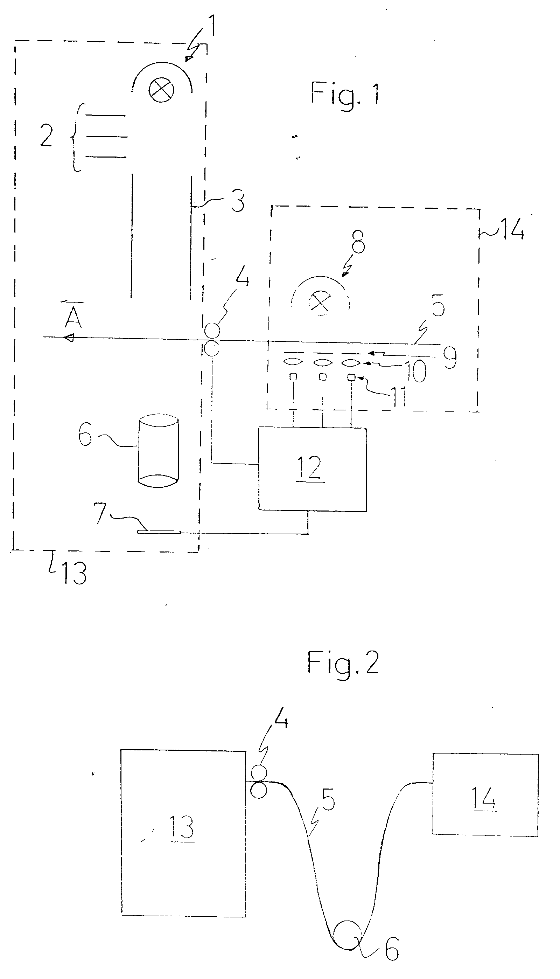

In Fig. 1 ist der Mainscanner 13 direkt neben dem Prescanner 14 angeordnet. In dem Prescanner wird der Film durch die Lichtquelle 8 beleuchtet und ein jeweils zeilenförmiger Abschnitt über die Linsen 10 auf die Sensorzeilen 11 abgebildet. Im Strahlengang ist jeweils ein Farbfilter 9 angeordnet, so daß auf den Sensorzeilen 11 entsprechend ein Blau-, Grün- und Rotauszug abgebildet wird. Die Sensorzeilen 11 sind mit der Recheneinheit 12 verbunden.

Der Mainscanner 13 weist hier im Gegensatz zu dem Prescanner ein Flächen-CCD-Array 7 auf. Es ist allerdings auch möglich, im Mainscanner eine Zeilen-CCD, z. B. eine Trilinearzeilen-CCD, einzusetzen.

Jeweils ein Einzelbild des Filmes 5 wird über das Objektiv 6 auf das CCD-Array 7 abgebildet. Das Objektiv 6 ist vorteilhafterweise als Zoom-Objektiv ausgeführt, so daß auch unterschiedliche Filmformate verarbeitet und die jeweiligen Einzelbilder vollflächig auf das CCD-Array 7 projiziert werden können. Auch dieses Array 7 ist mit der Recheneinheit 12 verbunden. Der Film 5 wird durch die Lichtquelle 1 und den im Strahlengang befindlichen Spiegelschacht 3 beleuchtet. Oberhalb des Spiegelschachts ist ein Filteraggregat 2 vorgesehen, so daß für jedes Einzelbild verschiedene Farbauszüge, insbesondere in den Farben rot, grün und blau, gemessen werden können.

Mit der Positioniereinheit 4 wird der Film einzelbildweise in dem Mainscanner 13 positioniert.

Der Film wird in Richtung des Pfeiles A durch nicht gezeigte Transportmittel durch den Prescanner 14 gefördert. Dabei wird jeder zeilenförmige Abschnitt des Films nacheinander auf den Sensorzeilen 11 abgebildet. Diese Informationen fließen der Recheneinheit 12 zu. Aus den Farbauszügen des ganzen Films werden dort die Positionen der Einzelbilder ermittelt und die filmspezifischen Daten festgestellt. Im Rücklauf wird die Positioniereinheit 4 durch die Recheneinheit 12 so angesteuert, daß der Film jeweils gestoppt wird, wenn sich ein Einzelbild im Abbildungsstrahlengang des Mainscanners 13 befindet. Mit Hilfe der engeschwenkten Filter 2 werden dann drei Belichtungen durchgeführt und die entsprechenden Farbauszüge aus dem CCD-Array 7 in die Recheneinheit ausgelesen. Um die Geschwindigkeit dieses Auslesevorgangs zu steigern, wird vorteilhafterweise ein CCD-Array verwendet, das in mehrere Sektoren eingeteilt ist, die parallel ausgelesen werden können. Die ausgelesenen Daten werden in der Recheneinheit 12 wieder zu einem Bild zusammengesetzt. Die Bilddaten werden ebenfalls durch die filmspezifischen Daten, die während des Prescans ermittelt wurden, modifiziert, um beispielsweise spezielle filmspezifische Farbstiche eliminieren zu können.

Bei der in Fig. 2 gezeigten Scaneinrichtung ist zwischen dem Prescanner 14 und dem Mainscanner 13 eine Speicherschlaufe vorgesehen, die eine bewegliche Tänzerrolle 6 aufweist. Diese Schlaufe ist so ausgelegt, daß sie eine ganze Filmlänge aufnehmen kann. Ebenso wird durch diese Schlaufe der kontinuierliche Transport durch die Prescan-Station 14 von dem intermittierenden Transport durch die Mainscan-Station 13 entkoppelt. Ansonsten arbeitet dieser Durchlaufscanner in der gleichen Art wie der oben beschriebene Scanner mit Umkehr der Filmtransportrichtung.

## Patentansprüche

1. Verfahren zum digitalen Erfassen fotografischer Filme, die eine Vielzahl von Einzelbildern aufweisen, wobei die Einzelbilder zuerst mit einer ersten Auflösung abgetastet, aus den Abtastwerten Parameter für eine weitere Abtastung ermittelt und die Filme mit einer zweiten, höheren Auflösung abgetastet werden, **dadurch gekennzeichnet**, daß nach dem Abtasten einer Vielzahl von Einzelbildern aus den Abtastwerten der ersten Abtastung die Positionen der Einzelbilder auf dem Film ermittelt und die Einzelbilder für die weitere Abtastung positioniert werden und daß die weitere Abtastung in einer Phase erfolgt, in der sich das abzutastende Einzelbild in Ruhelage befindet.

2. Verfahren nach Anspruch 1, dadurch gekennzeichnet, daß die Filme zuerst in den Farben Rot, Grün, Blau abgetastet werden.

3. Verfahren nach Anspruch 2, dadurch gekennzeichnet, daß aus den Abtastwerten der ersten Abtastung filmspezifische Daten ermittelt werden.

4. Verfahren nach Anspruch 3, dadurch gekennzeichnet, daß die Abtastwerte der weiteren Abtastung mit den filmspezifischen Daten modifiziert werden.

5. Verfahren nach Anspruch 1, dadurch gekennzeichnet, daß die weitere Abtastung erst dann erfolgt, wenn die erste Abtastung abgeschlossen ist.

6. Verfahren nach Anspruch 1, dadurch gekennzeichnet, daß die Filme zuerst in einer Richtung abgetastet werden und die weitere Abtastung im Rücklauf der Filme erfolgt.

7. Verfahren zum digitalen Erfassen fotografischer Filme, die eine Vielzahl von Einzelbildern aufweisen, wobei die Einzelbilder zuerst mit einer ersten Auflösung abgetastet, aus den Abtastwerten Parameter für eine weitere Abtastung ermittelt und die Filme mit einer zweiten, höheren Auflösung abgetastet werden, dadurch gekennzeichnet, daß nach dem Abtasten einer Vielzahl von Einzelbildern aus den Abtastwerten der ersten Abtastung filmspezifische Werte ermittelt und die filmspezifischen Werte bei der weiteren Abtastung berücksichtigt werden.

8. Vorrichtung zum digitalen Erfassen fotografischer Filme, die eine Vielzahl von Einzelbildern aufweisen, mit einer ersten Abtasteinrichtung zum Abtasten der Einzelbilder mit einer ersten Auflösung, mit einer Recheneinrichtung, mit der aus den Abtastwerten der ersten Abtasteinrichtung Parameter für eine weitere Abtastung ermittelbar sind und mit einer weiteren Abtasteinrichtung zum Abtasten der Einzelbilder mit einer zweiten, höheren Auflösung, **dadurch gekennzeichnet**, daß eine Führungs- und/oder Transporteinrichtung für den Film vorgesehen ist, die so aufgebaut ist, daß wenigstens ein Teil des Films mit einer Vielzahl von Einzelbildern zwischen der ersten und der weiteren Abtasteinrichtung speicherbar ist und daß der Film in der weiteren Abtasteinrichtung einzelbildweise positionierbar ist.

9. Vorrichtung nach Anspruch 8, dadurch gekennzeichnet, daß in der weiteren Abtasteinrichtung ein Flächen-CCD-Array vorgesehen ist, auf das ein Einzelbild des Filmes komplett abbildbar ist.

10. Vorrichtung nach Anspruch 9, dadurch gekennzeichnet, daß in der weiteren Abtasteinrichtung eine Lichtquelle und einschwenkbare Farbfilter vorgesehen sind.

11. Vorrichtung nach Anspruch 10, dadurch gekennzeichnet, daß die Einzelbilder über ein Objektiv auf-das Flächen-CCD-Array abbildbar sind.

12. Vorrichtung nach Anspruch 8, dadurch gekennzeichnet, daß in der ersten Abtasteinrichtung eine Sensorzeile vorgesehen ist, die quer zur Filmtransportrichtung angeordnet ist.

13. Vorrichtung nach Anspruch 12, dadurch gekennzeichnet, daß drei Sensorzeilen vorgesehen sind, wobei das auf die Sensorzeilen auftreffende Licht in den Farben Rot, Grün, Blau angefiltert ist.

14. Vorrichtung nach Anspruch 8, dadurch gekennzeichnet, daß die Recheneinrichtung so aufgebaut ist, daß aus den Abtastwerten der ersten Abtasteinrichtung die Positionen der Einzelbilder auf dem Film ermittelbar sind.

15. Vorrichtung nach Anspruch 8, dadurch gekennzeichnet, daß die Recheneinrichtung so aufgebaut ist, daß aus den Abtastwerten der ersten Abtasteinrichtung filmspezifische Daten ermittelbar sind.

16. Vorrichtung nach Anspruch 9, dadurch gekennzeichnet, daß das Flächen-CCD-Array in mehrere Sektoren aufgeteilt ist, die gleichzeitig auslesbar sind.
